# FASCICULE DE BREVET EUROPEEN

(11) **EP 2 825 353 B1**
(45) Date de publication et mention de la délivrance du brevet: **06.11.2019**
(21) Numéro de dépôt: 13715294.8
(22) Date de dépôt: 11.03.2013
(51) Int. Cl.: B25J 19/06, B25J 9/16

(54) **INSTALLATION ROBOTISÉE AUTOMATIQUE**
AUTOMATISCHE UND AUTOMATISIERTE INSTALLATION
AUTOMATIC AUTOMATED INSTALLATION

(30) Priorité: 12.03.2012 FR 1252192
(43) Date de publication de la demande: 21.01.2015
(73) Titulaire: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: MOUGIN, Didier, F-76930 Octeville Sur Mer (FR); CHERON, Gaël, F-76930 Octeville Sur Mer (FR)
(74) Mandataire: Sidel Group
(86) Numéro de dépôt international: PCT/FR2013/050503
(87) Numéro de publication internationale: WO 2013/136002

(56) Documents cités:
- EP-A1- 2 186 761
- FR-A1- 2 921 636
- US-A1- 2004 089 793
- US-A1- 2007 211 395
- US-A1- 2008 021 597
- US-A1- 2010 179 690

## Description

L'invention concerne une installation robotisée automatique de palettisation, dans laquelle un robot est mis en oeuvre suivant au moins un mode de fonctionnement.

Usuellement, et pour des questions de sécurité, une telle installation comprend une enceinte fermée dans laquelle le robot évolue, et empile des produits sur une palette positionnée à un poste de palettisation. Une porte située devant le poste de palettisation permet à un opérateur de venir récupérer la palette quand cette dernière est pleine.

Toujours pour des questions de sécurité, l'enceinte est équipée de moyens de détection qui, quand ils détectent la présence d'une personne dans l'enceinte ou l'ouverture intempestive de la porte, déclenchent la mise en sécurité de l'installation, arrêtant le robot et coupant l'alimentation en énergie de l'installation.

On connait du document EP 2 186 761 A1 une telle installation dont les moyens de détection comprennent une barrière immatérielle située au-dessus du niveau supérieur d'une palette vide et désactivable au moment de la sortie d'une palette pleine; un opérateur n'a pas à entrer dans l'enceinte pour récupérer une palette pleine ou installer une nouvelle palette, et ces opérations n'activent pas la barrière immatérielle.

Une telle installation assure une sécurité optimale pour l'opérateur, mais limite la productivité.

En effet, si l'opérateur doit entrer dans l'enceinte pour une raison quelconque (récupération d'un produit pour le contrôle qualité, par exemple), l'installation est mise en sécurité. Il en résulte que le robot n'est pas productif quand l'enceinte est ouverte et durant tout le temps où l'installation est mise en sécurité, ou bien encore durant tout le temps nécessaire à la remise sous tension de l'installation après une mise en sécurité de cette dernière.

On connait aussi du document US 2007/0211395 A1 une installation robotisée automatique de palettisation munie de moyens de détection associés à des moyens de commande de plusieurs modes de fonctionnement du robot, et permettant de reconnaître la présence d'un chariot élévateur dans l'enceinte.

L'invention vise à proposer une nouvelle installation qui est plus productive que celles évoquées ci-dessus, tout en assurant la sécurité des opérateurs qui récupèrent des palettes pleines dans les enceintes ou repositionnent des palettes vides dans les zones de palettisation.

L'invention concerne une installation robotisée automatique, dans laquelle au moins un robot est mis en œuvre suivant au moins un mode de fonctionnement dans au moins une zone de travail, ladite installation comportant
- une enceinte munie d'au moins une porte offrant l'accès à au moins un poste d'intervention opérateur, ledit au moins un poste d'intervention opérateur étant situé dans ladite zone de travail dudit robot,
- des moyens de détection de présence d'un élément dans ladite enceinte fermée audit poste d'intervention opérateur.

L'installation comporte des moyens de détection qui sont agencés dans ladite enceinte fermée pour délimiter au moins deux zones, et qui sont également associés à des moyens de commande dudit au moins un mode de fonctionnement du robot, chaque zone délimitée par les moyens de détection étant associée à un mode de fonctionnement du robot.

Une telle installation robotisée est connue et est par exemple décrite dans les documents US 2010/0179690 A1 et US 2008/0021597 A1.

Grâce à la délimitation de plusieurs zones, chacune commandant un mode de fonctionnement particulier du robot, il est possible de faire travailler le robot en continu ou, à tout le moins au maximum dans les limites des normes de sécurité en vigueur, tout en assurant la sécurité des individus qui pourraient s'introduire dans l'enceinte.

En effet, grâce à ces particularités, l'installation autorise un mode de fonctionnement du robot qui n'est pas dangereux pour l'opérateur entrant dans l'enceinte.

Une telle installation n'est toutefois pas conçue pour une activité de palettisation.

L'invention est, elle, conçue spécifiquement pour assurer une palletisation de produits dans deux zones, et elle permet d'augmenter la production du robot en limitant ses arrêts et ses temps d'arrêt : en effet, grâce à l'invention, il est possible d'arrêter le fonctionnement du robot sans que toute la machine soit mise à l'arrêt (mise en sécurité).

Selon l'invention, des moyens de détection délimitent au moins deux zones situées entièrement au-dessus d'une hauteur prédéterminée d'un sol de l'enceinte, ladite hauteur étant supérieure à la hauteur d'une palette vide.

Une première solution technique propre à l'invention concerne une installation selon la revendication 1, dans laquelle les moyens de détection sont positionnés à une hauteur prédéterminée d'un sol de ladite enceinte, ladite hauteur étant supérieure à la hauteur d'une palette vide ;

De cette façon, la présence ou non d'une palette vide n'est pas détectée par les moyens de détection. L'introduction d'une palette ou sa présence dans les zones de travail n'intervient donc pas sur le mode de fonctionnement su robot.

L'enceinte peut toutefois être équipée de seconds moyens permettant de détecter la présence d'une palette dans une zone de travail, de manière à autoriser ou non, le robot à travailler dans la zone afin de déposer sur la palette les produits.

Ces seconds moyens de détection sont toutefois indépendant des moyens de détection de la présence d'éléments ou d'objet dans les zones prédéterminées, positionnés à une certaine hauteur du sol.

Une autre solution technique, propre à l'invention, concerne une installation selon la revendication indépendante 13, dans laquelle les moyens de détection comportent une caméra.

Suivant cette solution, la caméra pourrait être positionnée n'importe où dans l'enceinte, y compris sous le niveau d'une palette (par exemple au sol). Toutefois, dans son mode de fonctionnement de surveillance desdites aux moins deux zones (chacune associée à un mode de fonctionnement du robot), elle ne prendrait pas en considération la zone située sous le niveau supérieur de la palette. De cette façon, les moyens de détection de présence ou d'absence de la palette restent indépendant des moyens de détection des zones associées aux modes de travail du robot.

Par ailleurs, l'invention présente un autre intérêt : avec les installations de l'état de la technique, il était nécessaire de former les opérateurs pour faire fonctionner l'installation : les opérateurs devaient connaître le procédé de remise en fonctionnement de l'installation quand elle a été mise en sécurité : par exemple, l'installation devait tout d'abord être réarmée, puis les moyens de détection devaient être activés avant d'autoriser la remise en marche du robot de l'installation... Ceci était réalisé en appuyant sur toute une série de boutons sur un poste de commande de l'installation.

Grâce à l'invention, la machine n'est plus mise en sécurité dès l'ouverture de l'enceinte dans laquelle travaille le robot.

Toutes les opérations que devait connaître un opérateur pour remettre en marche l'installation ne sont plus nécessaires, car l'installation conforme à l'invention garantit la sécurité de l'opérateur sans mise en sécurité de l'installation, simplement en arrêtant le robot.

L'invention a d'ailleurs été mise au point grâce à la mise en place d'une nouvelle norme (ISO 10 218-1 et ISO 10 218-2) qui autorise l'entrée d'un opérateur dans une enceinte dans laquelle un robot travaille, à condition de respecter certaines obligations.

L'invention respecte ces obligations et améliore l'ergonomie de fonctionnement des installations robotisées automatisées.

L'invention peut également comporter les caractéristiques suivantes, prises séparément ou en combinaison :
- l'installation peut comprendre deux postes d'intervention opérateur compris dans ladite zone de travail du robot, en ce que l'enceinte comporte au moins deux ouvertures d'accès aux deux postes d'intervention opérateur et une porte montée mobile entre lesdites au moins deux ouvertures, ainsi que des capteurs de présence de la porte à chacune desdites au moins deux ouvertures,
- les moyens de détection peuvent délimiter :
   ∘ une première zone dans ladite enceinte, ladite première zone commandant le déclenchement d'un avertisseur d'entrée dudit élément dans ladite enceinte, et autorise un mode de fonctionnement du robot suivant un rythme prédéterminé,
   ∘ une seconde zone dans ladite enceinte, ladite seconde zone commandant un mode de fonctionnement du robot suivant un rythme ralenti par rapport audit rythme prédéterminé,
   ∘ une troisième zone dans ladite enceinte, ladite troisième zone commandant l'arrêt du fonctionnement du robot ;
- les moyens de détection peuvent comporter un scrutateur laser de ladite enceinte ;
- les moyens de détection peuvent comporter des capteurs ;
- les moyens de détection peuvent comporter une caméra ;
- l'installation peut être équipée d'au moins un capteur de présence d'une palette dans ledit au moins un poste d'intervention opérateur ;
- l'installation peut être équipée de moyens de détection de palette pleine ;
- les moyens de commande dudit au moins un mode de fonctionnement du robot peuvent être associés à des moyens de contrôle de sécurité ;
- les moyens de contrôle de sécurité peuvent repérer au moins une séquence de modes de fonctionnement du robot et autoriser ou non le robot qui est à l'arrêt à travailler de nouveau, ou déclencher la mise à l'arrêt de l'installation ;
- ledit au moins un poste d'intervention opérateur peut être un poste de palettisation et ledit élément détecté peut être un opérateur ou un transpalette.

L'invention concerne également des procédés de fonctionnement particuliers de mise en œuvre d'une installation telle que définie ci avant.

Notamment, suivant un procédé conforme à l'invention, mettant en œuvre une installation également conforme à l'invention comportant deux postes d'intervention opérateur, deux ouvertures dans l'enceinte et une seule porte, les étapes suivantes sont mises en œuvre :
- au poste d'intervention opérateur situé derrière une ouverture dont le capteur détecte la présence d'une porte, les moyens de commande contrôlent la mise en œuvre d'un mode de fonctionnement du robot dans le poste d'intervention opérateur situé derrière la porte,
   et,
- au poste d'intervention opérateur situé derrière une ouverture dont le capteur ne détecte pas de porte, les moyens de commande interdisent l'accès du robot, et ils activent la mise en œuvre des moyens de détection.

Suivant encore un procédé conforme à l'invention, mettant en œuvre une installation dans laquelle les moyens de contrôle de sécurité repèrent au moins une séquence de modes de fonctionnement du robot, la séquence repérée est la suivante :
- détection d'intrusion dans une première zone d'alerte, ne changeant pas le mode de fonctionnement du robot et déclenchant un indicateur sonore ou visuel,
- détection d'intrusion dans une seconde zone commandant un fonctionnement du robot suivant un rythme ralenti,
- détection d'intrusion dans une troisième zone commandant l'arrêt du robot,
- détection à nouveau d'intrusion dans ladite seconde zone,
- et détection à nouveau d'intrusion dans ladite première zone.

Enfin, suivant encore un autre procédé conforme à l'invention, mettant en œuvre une installation équipée de moyens de détection de palette pleine, les étapes suivantes sont réalisées :
- déclenchement de l'ouverture de la porte pour autoriser l'accès audit poste d'intervention opérateur,
- inhibition des moyens de commande du mode de fonctionnement du robot,
- surveillance d'une sortie complète de ladite palette pleine de ladite installation par détection de la présence de la palette pleine dans une troisième zone, puis dans une seconde zone, puis dans une première zone délimitée par lesdits moyens de détection de ladite installation.

Pour pouvoir être exécutée, l'invention est exposée de façon suffisamment claire et complète dans la description suivante qui est, en plus, accompagnée de dessins dans lesquels :
- La figure 1 montre schématiquement, en vue de dessus, une installation conforme à l'invention.
- La figure 2 est une vue partielle et en perspective de l'installation montrée en figure 1,
- La figure 3 est une autre vue partielle et en perspective de l'installation montrée en figures 1 et 2, montrant les moyens de détection définissant trois zones dans l'enceinte et/ou hors de l'enceinte mais proche de celle-ci, ainsi qu'un opérateur,

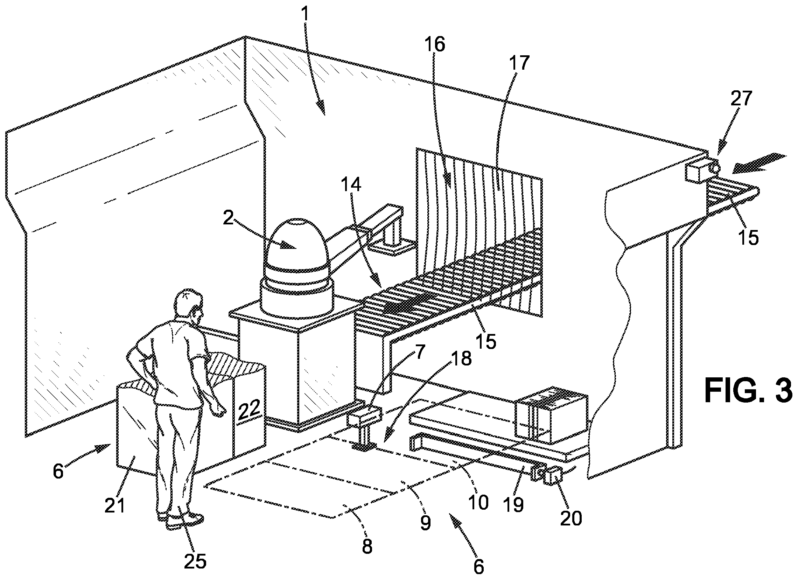

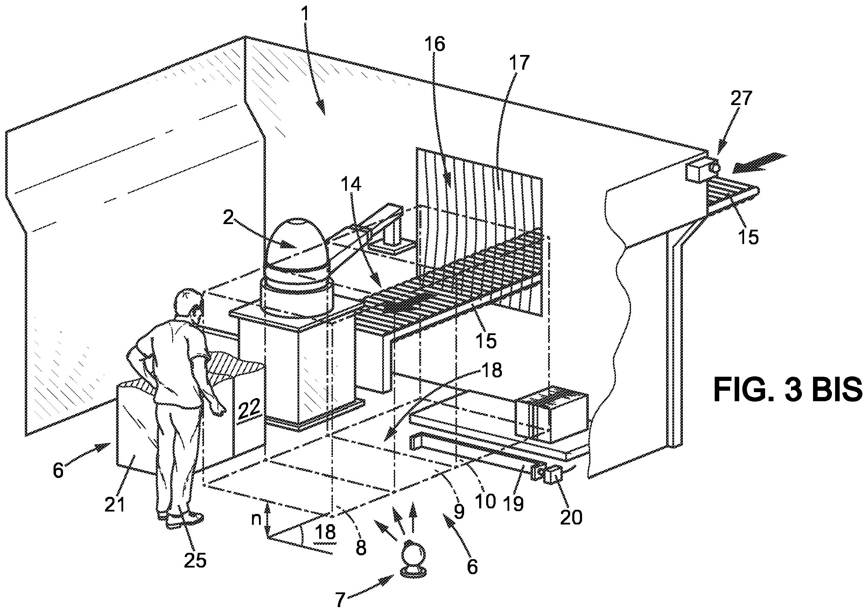

- La figure 3 bis montre la même installation que celle illustrée en figure 3, en vue partielle et en perspective, mais avec des moyens de détection différents de ceux illustrés en figure 3,

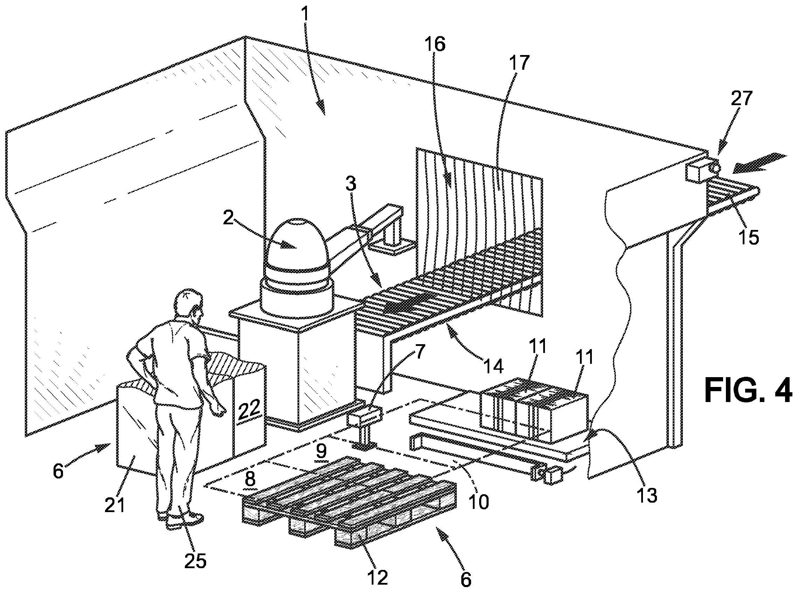

- La figure 4 montre l'installation de la figure 3 dans laquelle une palette vide est en train d'être insérée,

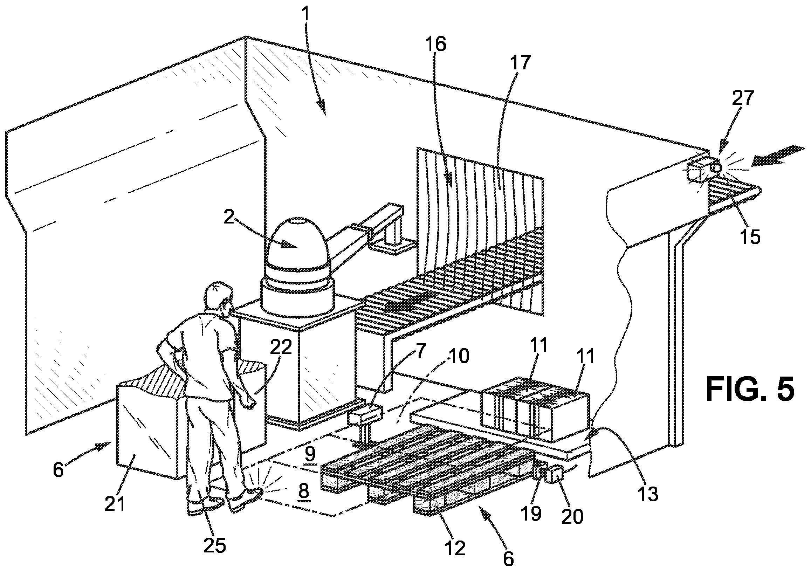

- La figure 5 montre l'installation de la figure 3 dans laquelle une palette vide est insérée complètement dans un emplacement qui lui est dédié, et dans laquelle l'opérateur entre dans une première zone définie par les moyens de détection,

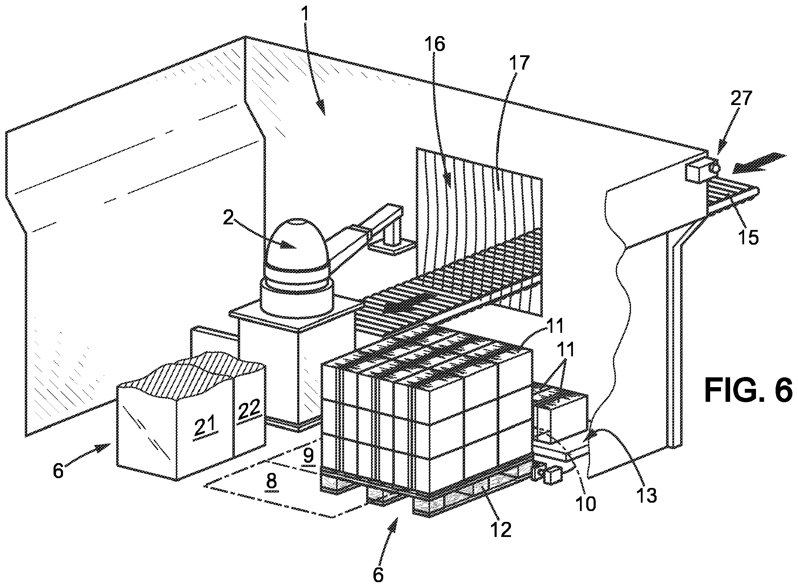

- La figure 6 montre l'installation de la figure 3 dans laquelle se trouve une palette pleine, la palette pleine se trouvant dans une troisième zone de détection des moyens de détection,

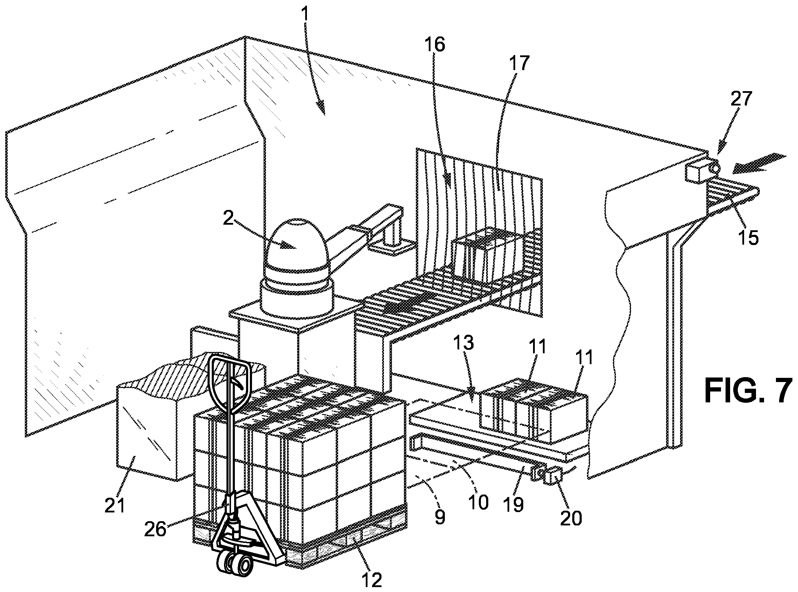

- La figure 7 montre l'installation de la figure 3 dans laquelle se trouve une palette pleine, la palette pleine se trouvant dans une seconde zone de détection des moyens de détection,

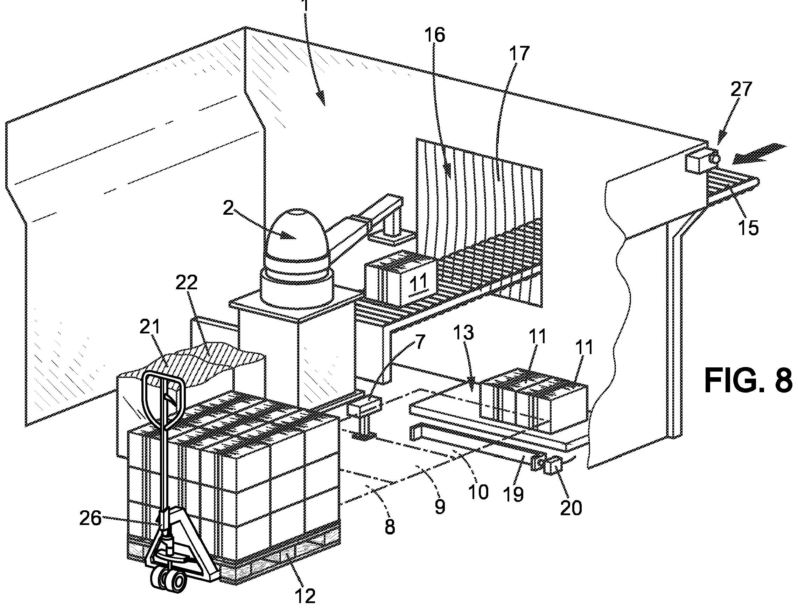

- La figure 8 montre l'installation de la figure 3 dans laquelle se trouve une palette pleine, la palette pleine se trouvant dans une première zone de détection des moyens de détection,

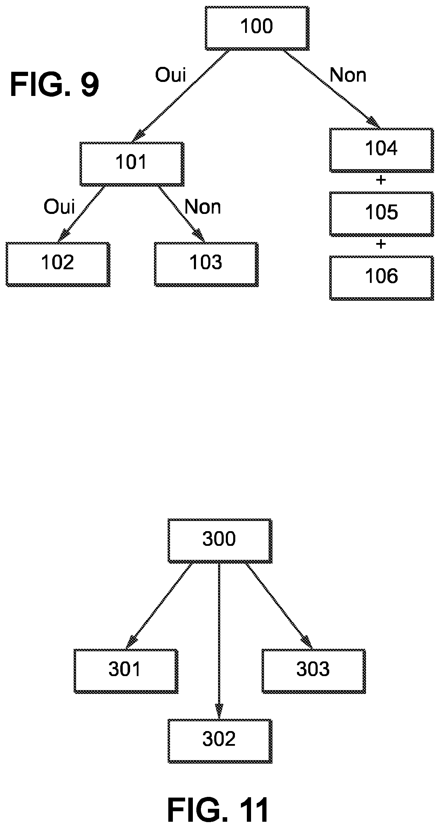

- La figure 9 est un schéma fonctionnel d'un mode de fonctionnement de l'installation conforme à l'invention,

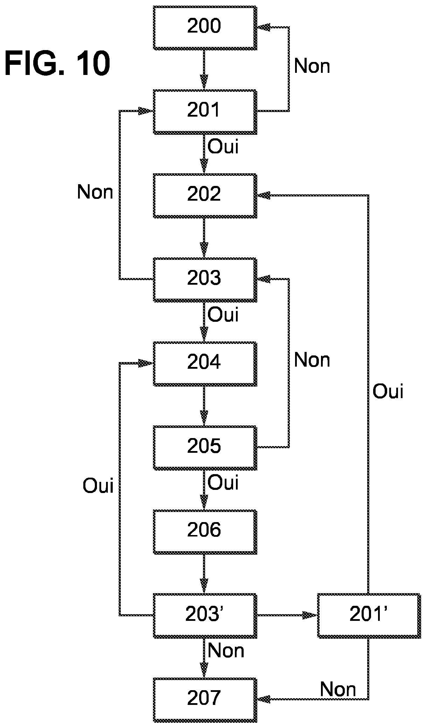

- La figure 10 est un second schéma fonctionnel d'un second mode de fonctionnement de l'installation conforme à l'invention,
- Et la figure 11 est un troisième schéma fonctionnel d'un mode de fonctionnement particulier de l'installation conforme à l'invention.

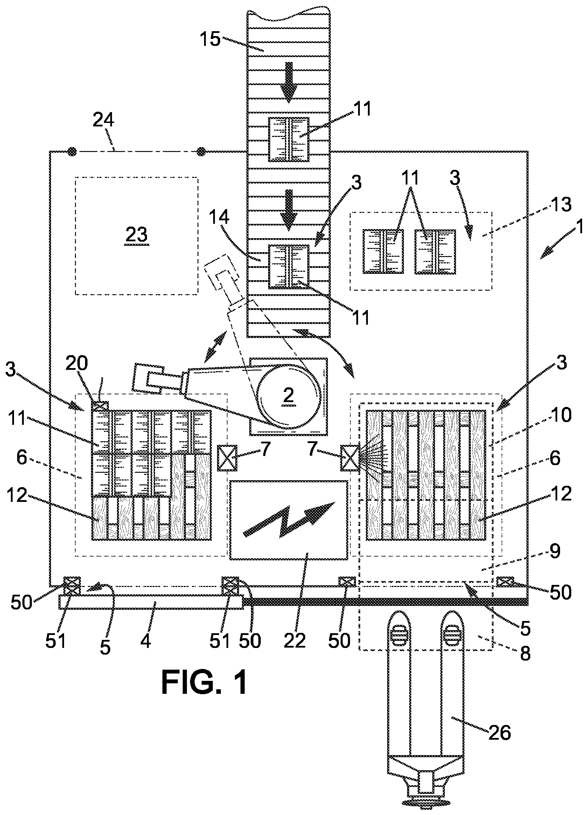

L'installation montrée en figure 1 est une installation robotisée automatique.

Elle comporte une enceinte 1 fermée dans laquelle un robot 2 est mis en œuvre.

En particulier, le robot 2 peut fonctionner suivant plusieurs modes de fonctionnement, c'est-à-dire qu'il peut réaliser plusieurs mouvements différents ou réaliser les mêmes mouvements mais à des cadences différentes, par exemple. Le robot 2 fonctionne ainsi suivant au moins un mode de fonctionnement.

Le robot 2 travaille dans une zone 3 appelée « zone de travail » : il s'agit d'une zone située dans l'enceinte et dans laquelle il est autorisé à travailler.

Concrètement, le robot 2 est autorisé à travailler dans quatre zones - la zone 3 comprend donc quatre sous-zones : deux zones portant la référence 6, qui seront également appelées par la suite des postes d'intervention opérateur, dans chacune desquelles le robot 2 vient positionner suivant un schéma donné des produits 11 sur des palettes 12, une zone 13 qui est une zone tampon, dans laquelle le robot 2 peut entasser plusieurs produit 11 quand il n'est pas autorisé à travailler aux postes 6 d'intervention opérateur, et une zone 14 d'amenée des produits 11.

La zone 14 d'amenée des produits 11 comprend l'extrémité d'un convoyeur 15 d'amenée des produits 11 qui ont été préparés en amont. Pour permettre l'amenée des produits 11 jusqu'au robot 2, l'enceinte 1 comporte une fenêtre 16 traversée par le tapis d'amenée du convoyeur 15. La fenêtre 16 peut être équipée de bandes 17 souples verticales permettant de garder l'enceinte fermée.

L'enceinte 1 fermée est munie d'une porte 4 qui est montée mobile entre deux ouvertures 5.

Derrière chaque ouverture 5, se trouve un poste 6 d'intervention opérateur, c'est-à-dire un poste dans lequel un opérateur peut intervenir, soit parce qu'il a quelque chose à y prendre, soit parce qu'il a quelque chose à y installer, soit parce qu'il doit y vérifier quelque chose. Comme indiqué également plus haut, le poste 6 d'intervention opérateur est également un poste dans lequel le robot est autorisé à travailler. C'est ainsi que les postes 6 d'intervention opérateur sont compris dans la zone de 3 de travail du robot 2.

Chaque ouverture 5 comporte des capteurs 50 qui détectent la présence de la porte 4. La porte 4 peut également comporter des capteurs 51 pour faire contact avec les capteurs 50, quand elle est correctement positionnée devant l'ouverture 5.

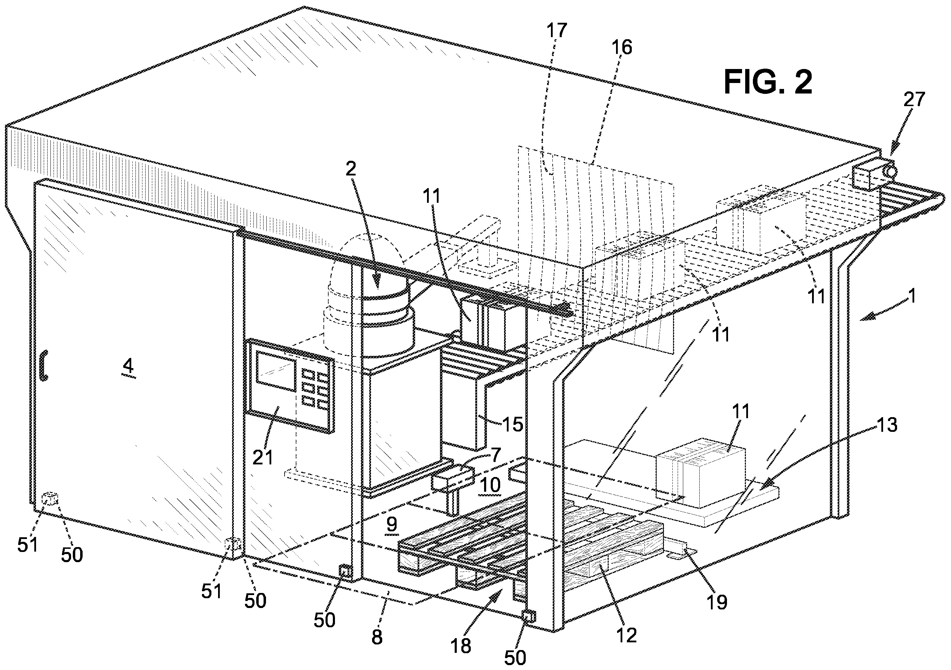

Comme on peut le voir sur la figure 1 ou sur la figure 2, l'installation comprend également des moyens 7 de détection, qui détectent la présence d'un élément dans l'enceinte, et en particulier au niveau d'un poste 6 d'intervention opérateur.

Comme dans l'exemple montré il y a deux postes 6 d'intervention opérateur, l'installation comporte deux moyens 7 de détection, chaque moyen 7 étant disposé dans un poste 6 d'intervention opérateur ou à proximité de ce dernier.

Comme on peut le voir également, les moyens 7 de détection sont agencés pour délimiter plusieurs zones dans l'enceinte ou à proximité de celle-ci. Ces trois zones portent les références 8, 9 et 10 sur les figures.

Comme on peut le voir, les trois zones 8, 9 et 10 couvrent au moins partiellement le poste 6 d'intervention opérateur.

Les moyens 7 de détection peuvent être réalisés par des capteurs, par une caméra (auquel cas la caméra sera associée à des moyens d'analyse d'images) et, dans le cadre de ce mode de réalisation préféré, les moyens 7 de détection comportent un scrutateur 7 laser.

Comme on peut le voir en particulier sur les figures 2 et 4, le scrutateur 7 laser est positionné à une hauteur prédéterminée du sol 18 de l'enceinte 1.

La hauteur du scrutateur 7 laser est calculée de manière à être supérieure à celle d'une palette 12 : De cette façon, le laser du scrutateur 7 ne détecte pas la présence d'une palette 12 placée dans l'enceinte, au poste 6 d'intervention opérateur.

L'enceinte est toutefois équipée de moyens permettant de détecter la présence d'une palette dans une zone 6 d'intervention opérateur.

Ces moyens de détection sont réalisés par une butée 19 de positionnement de palette 12, en forme de U, placée à l'extrémité de la zone 6 (figure 3).

Un capteur 20 de présence de palette est positionné sur la butée, de sorte que quand une palette 12 est positionnée contre la butée 19 en forme de U, le capteur 20 détecte la présence de cette palette 12.

La butée 19 pourrait avoir une autre forme que celle en U, comme montré par exemple en figure 2, sans sortir du cadre de l'invention.

Comme montré en figures 1 et 2 par exemple, l'enceinte peut également être équipée de moyens 21 de commande de l'installation et notamment du fonctionnement du robot 2, tels qu'un ordinateur ou une unité de commande, d'une armoire 22 électrique, et éventuellement d'un autre poste 23 interne (figure 1), accessible par exemple par une porte 24 arrière. Le poste 23 peut par exemple être un poste de contrôle qualité, dans lequel le robot 1 dépose de temps en temps un produit 11 afin qu'il soit contrôlé par un opérateur.

Dans le cas de l'exemple illustré sur la figure 3bis, les moyens 7 de détection sont réalisés par une caméra, associée à des moyens d'analyse d'image (non représentés). La caméra est positionnée au sol et délimite les trois zones 8, 9 et 10 précitées. Les trois zones 8, 9 et 10 peuvent être des volumes, comme le montre la figure 3bis.

Les zones 8, 9 et 10 sont délimitées à partir d'un niveau n qui est supérieur au niveau supérieur d'une palette. Ceci est possible grâce aux moyens d'analyse d'image associé à la caméra.

Il va maintenant être fait référence aux particularités de l'installation conforme à l'invention, en faisant référence au mode de réalisation qui met en œuvre un scrutateur laser comme moyens de détection.

Quand il est actionné, le scrutateur 7 délimite trois zones 8, 9 et 10 dans le poste 6 d'intervention opérateur, comme il a été vu précédemment.

La scrutateur 7 est actionné quand les capteurs 50 de l'ouverture 5 détectent l'absence de la porte 4 (quand par exemple ils ne sont pas en vis-à-vis des capteurs 51) et quand, dans le poste 6 d'intervention opérateur, il n'y a pas de palette 12, ou bien quand il y a une palette 12 et que cette palette est vide.

Dans cette configuration, le scrutateur 7 laser est également en contact électronique avec des moyens de commande du fonctionnement du robot 2.

On considérera que les moyens de commande du mode de fonctionnement du robot 2 font partie des moyens qui commandent le fonctionnement de l'installation, c'est-à-dire les moyens 21 de commande.

Chaque zone 8, 9 ou 10 est associée à un mode de fonctionnement particulier du robot 2.

Dans le cadre du mode de réalisation présentement décrit, la zone 8, qui dépasse de l'enceinte, est associée à un mode de fonctionnement normal du robot 2 et à l'émission d'une alarme 27 (figure 2 notamment). Cette alarme 27 peut être visuelle et/ou sonore. Par exemple, quand un élément (un opérateur 25 ou un transpalette 26) entre dans la zone 8 et coupe le champ du laser, le robot continue de fonctionner normalement mais un message sonore retentit via l'alarme 27 afin de prévenir l'opérateur 25, par exemple, qu'il entre dans une zone sécurisée.

La zone 9 se trouve juste derrière la zone 8 mais, cette fois-ci, complètement à l'intérieur de l'enceinte. La zone 9 est associée à un mode de fonctionnement du robot qui est ralenti. Autrement dit, quand un élément pénètre dans la zone 9, automatiquement la cadence de travail du robot 2 est ralentie.

La zone 10 se trouve au cœur de l'enceinte, très proche du robot 2. Aussi, et par souci de sécurité, quand un élément pénètre dans la zone 10, le robot est mis en attente : il s'arrête.

Pour permettre de commander le mode de fonctionnement du robot associé à chaque zone de détection du scrutateur 7, ce dernier est bien entendu relié aux moyens 21 de commande du fonctionnement du robot.

Pour une question de lisibilité des figures, les câbles de connexion du scrutateur 7 reliés aux moyens 21 de commande n'ont pas été représentés.

Concrètement, le robot 2 est connectiquement relié aux moyens 21 de commande ainsi que le scrutateur 7 laser et les capteurs 50, 51 et 20, pour assurer le fonctionnement de l'installation conformément à ce qui va maintenant être présenté, en faisant référence, dans un premier temps, aux figures 4 et 5.

Dans l'installation 1 telle que montrée sur les figures 4 et 5, les postes 6 d'intervention opérateur sont vides.

Le robot 2 est à l'arrêt, au dessus de la zone 14 d'amenée des produits 11. En effet, quand les capteurs 20 de présence de palette, dans chacune des deux zones 3 de travail (qui sont également les postes 6 d'intervention opérateur), ne détectent pas de palette 12, alors le robot 2 peut entasser des produits 11 dans la zone tampon 13. Si la zone 13 comporte déjà un certain nombre de produits 11 (quantité prédéterminée), alors le robot 2 est mis à l'arrêt.

Pour la compréhension du fonctionnement de l'installation, on supposera que, sur les figures 4 à 8, la porte 4 (non représentée) ferme l'ouverture 5 située à gauche de l'installation (partie gauche de l'installation non représentée également).

L'ouverture 5 du côté droit de l'installation 1 n'est donc pas fermée par la porte.

Les capteurs 50 de l'ouverture 5 de droite indiquent donc aux moyens 21 de commande que l'ouverture 5 de droite n'est pas fermée.

Les moyens 21 de commande activent donc le scrutateur 7 laser du poste 6 d'intervention opérateur de droite.

Lorsque l'opérateur 25 introduit une palette 12 dans le poste 6 d'intervention opérateur de droite, aucun signal n'est transmis par le scrutateur 7 laser aux moyens 21 de commande, car la palette 12 passe en dessous du niveau du laser du scrutateur 7. La palette 12 n'est donc pas détectée.

Lorsque la palette 12 est placée en butée contre la butée 19 de positionnement dans le poste 6 d'intervention opérateur (figure 5), le capteur 20 détecte la présence de la palette 12 et avertit les moyens 21 de commande.

Les moyens 21 de commande n'autoriseront le robot 2 à entasser les produits 11 sur la palette 12 qui vient d'être placée que lorsque la porte 4 sera fermée devant l'ouverture 5 de droite.

Pour l'heure, quand l'opérateur entre dans la zone 8 (voir figure 5) en plaçant la palette 12 vide dans le poste 6 d'intervention opérateur, l'alarme sonore et/ou visuelle se met en marche car le scrutateur 7 a détecté l'intrusion de l'opérateur 25 dans la zone 8.

En reculant, l'opérateur 25 sort de la zone 8 et l'alarme 27 s'arrête.

Quand l'opérateur 25 ferme la porte 4, les moyens 21 de commande autorisent alors le robot à travailler au poste 6 d'intervention opérateur de droite, et le scrutateur 7 du poste 6 d'intervention opérateur de droite est désactivé.

On considère maintenant que le robot 2 a travaillé dans le poste 6 d'intervention opérateur de droite de telle manière que la palette 12 est désormais pleine.

Le robot 2 est programmé pour réaliser n rangées de N produit 11, sur x étages. Le robot 2 sait donc quand une palette 12 est pleine : la palette 12 est pleine pour le robot 2 quand il a fini de réaliser le schéma de remplissage qui lui a été donné.

Cela constitue en soi des moyens de détection de palette pleine.

Quand le robot 2 considère que la palette 12 est pleine (car il a fini le schéma de remplissage), il avertit les moyens 21 de commande, qui autorisent alors l'ouverture de la porte 4. La porte 4 s'ouvrant, cela active le scrutateur 7 laser. Toutefois, et bien que la palette 12 pleine soit présente dans la zone 10 qui commanderait normalement l'arrêt du robot 2, le signal de « palette pleine » reçu par les moyens de commande inhibe la commande du mode de fonctionnement du robot en fonction des zones du scrutateur, et ce jusqu'à ce que la palette ait été totalement dégagée de l'installation.

La figure 6 montre la palette 12 pleine, en position contre la butée.

On note que les zones 8, 9 et 10 du scrutateur sont activées. Le robot est montré en position d'arrêt. Toutefois, Ce n'est pas la présence de la palette 12 pleine dans la zone 9 qui a commandé l'arrêt du robot 2, mais le fait qu'il n'y a pas de palette dans le poste 6 d'intervention opérateur de gauche et le fait que la zone 13 tampon est pleine.

S'il y avait une palette dans le poste 6 d'intervention de gauche, détectée par le capteur 20, et que la porte fermait bien l'ouverture de gauche, alors le robot 2 pourrait travailler sur la palette 12 du poste de gauche sans problème.

Pour que les moyens 21 de commande du mode de fonctionnement du robot 2 en fonction des zones 8, 9 et 10 du scrutateur soient de nouveau opérationnels, il faut que certaines étapes soient respectées. En particulier, il faut que les moyens de commande détectent la sortie complète de la palette 12 pleine de l'installation.

Pour ce faire, on surveille qu'une certaine séquence de messages soient reçue par les moyens 21 de commande :
- présence de la palette pleine dans la zone 10,
- présence de la palette pleine dans la zone 9, et
- présence de la palette pleine dans la zone 8.

La séquence de message reçue doit être celle-ci et dans cet ordre, afin que les moyens 21 de commande du mode de fonctionnement du robot soient désinhibés.
Si la séquence est la suivante :
- présence de la palette pleine dans la zone 10,
- présence de la palette pleine dans la zone 9, et
- présence de la palette pleine dans la zone 10 ;
alors, l'installation se mettra automatiquement en sécurité et l'alimentation du robot 2 en courant sera coupée. Cette séquence signifie que la palette 12 a été de nouveau rentrée dans la zone 10, ce qui implique un problème.

C'est pour cette raison que, par précaution, la mise en sécurité de l'installation est déclenchée.

Ainsi, l'installation est équipée de moyens de contrôle de sécurité, liés notamment à la surveillance de séquences de messages à recevoir par les moyens 21 de commande.

La figure 11 expose schématiquement ce qui arrive suite à la réception, par les moyens 21 de commande, d'une indication de palette 12 pleine :
L'étape 300 est une indication de palette pleine : cette étape 300 déclenche : (i) une étape 301 d'ouverture de la porte 4, (ii) une étape 302 d'inhibition de la commande du mode de fonctionnement du robot 2 en fonction d'une détection d'un élément dans l'une quelconque des zones 8 à 10 du scrutateur, et (iii) une étape 303 de surveillance de la séquence de message indiquant la sortie complète de la palette pleine.

Les figures 6, 7 et 8 illustrent chacune respectivement les étapes suivantes :
- présence de la palette pleine dans la zone 10 (figure 6),
- présence de la palette pleine dans la zone 9 (figure 7), et
- présence de la palette pleine dans la zone 8 (figure 8).

Quand cette séquence est respectée, on désinhibe les moyens 21 de commande du mode de fonctionnement du robot. L'alarme peut donc être de nouveau déclenchée, et le robot peut alors être de nouveau ralenti dans son travail ou arrêté si on détecte un élément dans les zones 8, 9 ou 10 définies par le scrutateur 7 laser.

On comprend ainsi comment les moyens de contrôle et de sécurité permettent de laisser le robot 2 travailler dans l'autre poste 6 d'intervention tant que la palette pleine n'est pas sortie ou d'arrêter totalement l'installation si une séquence anormale est repérée lors de la sortie de la palette pleine, avant même de remettre en marche la commande du fonctionnement du robot 2 en fonction d'une détection d'un élément dans une zone qui n'est pas censée en contenir derrière une porte 4 ouverte.

Car il convient de noter que, quand la porte est fermée, le scrutateur 7 est désactivé dans le poste 6 d'intervention opérateur qui est placé derrière.

La figure 9 résume bien les conditions de fonctionnement de chaque poste 6 d'intervention opérateur.

L'étape 100 indique un état de fermeture de la porte 4 devant l'ouverture 5 d'accès à un poste 6 d'intervention opérateur.

Si la porte 4 est fermée (« oui » sur le schéma), alors on vérifie à l'étape 101 que le capteur 20 détecte bien une palette présente dans le poste 6 d'intervention opérateur.

Si la palette est présente (« oui » sur le schéma), alors à l'étape 102, on autorise le robot 2 à venir travailler dans ledit poste 6 d'intervention opérateur, et ce suivant un mode de travail normal prédéterminé si dans l'autre poste 6 il y a une palette pleine, ou bien suivant un mode de travail qui dépend d'une détection éventuelle d'élément dans l'une des zones 8 à 10 du scrutateur de l'autre poste 6 de travail, si dans cet autre poste il n'y a pas de palette 12 ou si la palette 12 n'est pas pleine.

Si la palette n'est pas présente (« non » sur le schéma), alors à l'étape 103, le robot est mis à l'arrêt jusqu'à ce que le capteur 20 détecte la présence d'une palette.

Si la porte 4 n'est pas fermée (« non » partant de l'étape 100), alors les étapes 104, 105 et 106 suivantes sont mises en œuvre :
- 104 : activation des moyens de détection au poste 6 d'intervention opérateur,
- 105 : interdiction au robot 2 de travailler audit poste 6 d'intervention opérateur,
- 106 : activation des moyens 21 de commande du mode de fonctionnement du robot dans l'autre poste 6 d'intervention opérateur (celui devant lequel la porte 4 est fermée).

La figure 10 montre comment fonctionnent les moyens de contrôle de sécurité dans un poste 6 d'intervention opérateur, après détection d'un élément dans les zones 8 à 10.

L'étape 200 concerne un mode de fonctionnement normal du robot 2 dans un poste 6 d'intervention opérateur (poste 6 dont l'ouverture 5 est fermée par la porte 4) : concrètement, le robot 2 empile des produits 11 sur une palette 12 suivant un schéma prédéterminé.

L'étape 201 concerne la détection éventuelle d'un objet dans la zone 8 du scrutateur de l'autre poste 6 d'intervention opérateur (celui dont l'ouverture 5 n'est pas fermée par la porte 4). Si un élément est détecté en zone 8 (« oui » sur le schéma partant de 201), alors l'alarme 27 est déclenchée par l'étape 202. Sinon (« non » sur le schéma partant de 201), le robot continue de travailler normalement.

L'étape 203 concerne la détection éventuelle d'un objet dans la zone 9 du scrutateur de l'autre poste 6 d'intervention opérateur (celui dont l'ouverture 5 n'est pas fermée par la porte 4). Si un élément est détecté en zone 9 (« oui » sur le schéma partant de 203), alors un mode de fonctionnement ralenti du robot 2 est déclenché par l'étape 204. Sinon (« non » sur le schéma partant de 203), on réitère l'étape 201, c'est-à-dire que l'on s'interroge sur la présence d'un éventuel élément en zone 8 dans l'autre poste 6 d'intervention opérateur.

L'étape 205 concerne la détection éventuelle d'un objet dans la zone 10 du scrutateur de l'autre poste 6 d'intervention opérateur. Si un élément est détecté en zone 10 (« oui » sur le schéma partant de 201), alors l'arrêt du robot 2 est déclenché par l'étape 206. Sinon (« non » sur le schéma partant de 205), on réitère l'étape 203, c'est-à-dire que l'on s'interroge sur la présence d'un éventuel élément en zone 9 dans l'autre poste 6 d'intervention opérateur.

L'étape 203' concerne la détection éventuelle d'un objet dans la zone 9 après déclenchement de l'arrêt du robot 2 à l'étape 206. Si un élément est de nouveau détecté en zone 9 (« oui » sur le schéma partant de 203'), alors l'étape 204 est réitérée, c'est-à-dire que l'on déclenche le mode de fonctionnement du robot 2 suivant un mode ralenti. Sinon (« non » sur le schéma partant de 203'), l'installation est mise en sécurité par l'étape 207 (arrêt total de l'installation), car cela signifie que ce qui est entré ne ressort pas et a disparu.

Si toutefois l'élément a été détecté en zone 2, et que le mode de fonctionnement ralenti a été déclenché, alors l'étape 201' consiste à vérifier que l'élément détecté en zone 9 repasse bien en zone 8 (étape 201' sur la figure 10).

Si l'élément est bien repassé en zone 8 (« oui » partant de 201' sur la figure 10), alors l'étape 202 est réitéré (déclenchement de l'alarme 27), sinon, (« non » partant de 201' sur la figure 10), alors l'installation est mise en sécurité par l'étape 207 (arrêt total de l'installation).

On comprend de ce qui précède que l'installation conforme à l'invention permet de faire travailler un robot 2 dans une enceinte fermée même si un opérateur 25 doit s'introduire dans une zone de cette enceinte, car elle comporte des moyens permettant d'assurer sa sécurité, comme notamment les zones définies par le scrutateur qui, quand elle détecte la présence d'un objet, permet de commander ou un ralentissement du rythme du robot 2 ou son arrêt si l'élément s'introduit trop dans l'enceinte.

On comprend également que l'installation comporte toujours des moyens de mise en sécurité totale de la machine au cas ou des situations illogiques auraient lieu, telles que celles où un objet entre et ne ressort pas, ou ressort bizarrement (passage de la zone 10 à la zone 8, par exemple), indiquant que l'installation a un problème et que cela nécessite une révision de cette dernière.

L'installation présentée sur les figures n'est toutefois pas limitative pour l'invention qui s'étend, bien évidemment, à la mise en œuvre de tout moyen équivalent.

## Revendications

1. Installation robotisée automatique de palettisation, dans laquelle au moins un robot (2) est mis en œuvre suivant au moins un mode de fonctionnement dans au moins une zone (3) de travail, ladite installation comportant
- une enceinte (1) fermée munie d'au moins une porte (4) offrant l'accès à au moins un poste (6) d'intervention opérateur, ledit au moins un poste (6) d'intervention opérateur étant situé dans ladite zone (3) de travail dudit robot,
- des moyens (7) de détection de présence d'un élément (25 ; 26) dans ladite enceinte (1) fermée audit poste (6) d'intervention opérateur, par exemple comportant une caméra,
les moyens (7) de détection étant agencés dans ladite enceinte (1) fermée pour délimiter au moins deux zones (8, 9, 10), et étant également associés à des moyens (21) de commande dudit au moins un mode de fonctionnement du robot (2), chaque zone (8, 9, 10) délimitée par les moyens (7) de détection étant associée à un mode de fonctionnement du robot (2), les moyens (7) de détection étant positionnés à une hauteur prédéterminée d'un sol (18) de ladite enceinte (1), ladite hauteur étant supérieure à la hauteur d'une palette (12) vide, lesdites au moins deux zones (8, 9, 10) couvrant au moins partiellement le poste (6) d'intervention opérateur et étant situées au-dessus d'une hauteur prédéterminée d'un sol (18) de ladite enceinte (1), ladite hauteur étant elle aussi supérieure à la hauteur d'une palette (12) vide, de sorte que la présence ou non d'une palette vide n'est pas détectée par lesdits moyens de détection.

2. Installation selon la revendication 1, **caractérisée en ce que** lesdites au moins deux zones (8, 9, 10) associées chacune à un mode de fonctionnement du robot (2) couvrent au moins partiellement ledit au moins un poste (6) d'intervention opérateur.

3. Installation selon la revendication 1 ou 2, **caractérisée en ce qu'**elle comprend deux postes (6) d'intervention opérateur compris dans ladite zone (3) de travail du robot (2), **en ce que** l'enceinte (1) comporte au moins deux ouvertures (5) d'accès aux deux postes (6) d'intervention opérateur et une porte (4) montée mobile entre lesdites au moins deux ouvertures (5), ainsi que des capteurs (50, 51) de présence de la porte (4) à chacune desdites au moins deux ouvertures (5).

4. Installation selon l'une quelconque des revendications précédentes, **caractérisée en ce que** les moyens (7) de détection délimitent :
- une première zone (8) dans ladite enceinte (1), ladite première zone (8) commandant le déclenchement d'un avertisseur (27) d'entrée dudit élément (25, 26) dans ladite enceinte (1), et autorise un mode de fonctionnement du robot (2) suivant un rythme prédéterminé,
- une seconde zone (9) dans ladite enceinte (1), ladite seconde zone (9) commandant un mode de fonctionnement du robot (2) suivant un rythme ralenti par rapport audit rythme prédéterminé,
- une troisième zone (10) dans ladite enceinte (1), ladite troisième zone (10) commandant l'arrêt du fonctionnement du robot (2).

5. Installation selon l'une quelconque des revendications précédentes, **caractérisée en ce que** les moyens de détection comportent un scrutateur (7) laser de ladite enceinte (1).

6. Installation selon l'une quelconque des revendications 1 à 4, **caractérisée en ce que** les moyens de détection comportent des capteurs.

7. Installation selon l'une quelconque des revendications 1 à 4, **caractérisée en ce que** les moyens de détection comportent une caméra.

8. Installation selon l'une quelconque des revendications précédentes, **caractérisée en ce qu'**elle est équipée d'au moins un capteur (20) de présence d'une palette (12) dans ledit au moins un poste (6) d'intervention opérateur.

9. Installation selon l'une quelconque des revendications précédentes, **caractérisée en ce qu'**elle est équipée de moyens de détection de palette pleine.

10. Installation selon l'une quelconque des revendications précédentes, **caractérisée en ce que** les moyens (21) de commande dudit au moins un mode de fonctionnement du robot (2) sont associés à des moyens de contrôle de sécurité.

11. Installation selon la revendication 10, **caractérisée en ce que** les moyens de contrôle de sécurité repèrent au moins une séquence de modes de fonctionnement du robot (2) et autorisent ou non le robot (2) qui est à l'arrêt à travailler de nouveau, ou déclenchent (207) la mise à l'arrêt de l'installation.

12. Installation selon l'une quelconque des revendications précédentes, **caractérisée en ce que** ledit au moins un poste (6) d'intervention opérateur est un poste de palettisation et **en ce que** ledit élément détecté est un opérateur (25) ou un transpalette (26).

13. Installation robotisée automatique de palettisation, dans laquelle au moins un robot (2) est mis en œuvre suivant au moins un mode de fonctionnement dans au moins une zone (3) de travail, ladite installation comportant
- une enceinte (1) fermée munie d'au moins une porte (4) offrant l'accès à au moins un poste (6) d'intervention opérateur, ledit au moins un poste (6) d'intervention opérateur étant situé dans ladite zone (3) de travail dudit robot,
- des moyens (7) de détection de présence d'un élément (25 ; 26) dans ladite enceinte (1) fermée audit poste (6) d'intervention opérateur,
les moyens (7) de détection étant agencés dans ladite enceinte (1) fermée pour délimiter au moins deux zones (8, 9, 10), et étant également associés à des moyens (21) de commande dudit au moins un mode de fonctionnement du robot (2), chaque zone (8, 9, 10) délimitée par les moyens (7) de détection étant associée à un mode de fonctionnement du robot (2),
les moyens de détection comportant une caméra apte à scruter lesdites au moins deux zones délimitées dans l'enceinte, lesdites au moins deux zones couvrant au moins partiellement le poste (6) d'intervention opérateur et étant situées au dessus d'une hauteur prédéterminée d'un sol (18) de ladite enceinte (1), ladite hauteur étant supérieure à la hauteur d'une palette (12) vide, de sorte que la présence ou non d'une palette vide n'est pas détectée par lesdits moyens de détection.

14. Procédé de mise en œuvre de l'installation selon la revendication 3, **caractérisé en ce que**
- au poste (6) d'intervention opérateur situé derrière une ouverture (5) dont le capteur (50) détecte la présence d'une porte (4), les moyens (21) de commande contrôlent la mise en oeuvre d'un mode de fonctionnement du robot (2) dans le poste (6) d'intervention opérateur situé derrière la porte (4),
et **en ce que**,
- au poste (6) d'intervention opérateur situé derrière une ouverture (5) dont le capteur (50) ne détecte pas de porte (4), les moyens (21) de commande interdisent l'accès du robot (2), et activent la mise en œuvre des moyens (7) de détection.

15. Procédé de mise en œuvre de l'installation selon la revendication 11, **caractérisé en ce que** ladite au moins une séquence de modes de fonctionnement est la suivante :
- détection d'intrusion (201) dans une première zone (8) d'alerte, ne changeant pas le mode de fonctionnement du robot et déclenchant (202) un indicateur sonore ou visuel,
- détection (203) d'intrusion dans une seconde zone (9) commandant un fonctionnement (204) du robot (2) suivant un rythme ralenti,
- détection (205) d'intrusion dans une troisième zone (10) commandant l'arrêt (206) du robot (2),
- détection (203') à nouveau d'intrusion dans ladite seconde zone (9),
- et détection (201) à nouveau d'intrusion dans ladite première zone (8).

16. Procédé de mise en œuvre de l'installation selon la revendication 9, **caractérisé en ce que**, quand une palette (12) est pleine, les étapes suivantes sont réalisées :
- déclenchement (301) de l'ouverture de la porte (4) pour autoriser l'accès audit poste (6) d'intervention opérateur,
- inhibition (302) des moyens de commande du mode de fonctionnement du robot (2),
- surveillance (303) d'une sortie complète de ladite palette (12) pleine de ladite installation par détection de la présence de la palette (12) pleine dans une troisième zone (10), puis dans une seconde zone (9), puis dans une première zone (8) délimitée par lesdits moyens (7) de détection de ladite installation.

## Patentansprüche

1. Automatische robotergestützte Palettierungsanlage, bei der mindestens ein Roboter (2) gemäß mindestens einer Betriebsart in mindestens einem Arbeitsbereich (3) eingesetzt wird, wobei die Anlage aufweist
- einen geschlossenen Raum (1), der mit mindestens einer Tür (4) versehen ist, die den Zugang zu mindestens einer Bedienereingriff-Station (6) bietet, wobei die mindestens eine Bedienereingriff-Station (6) sich im Arbeitsbereich (3) des Roboters befindet,
- Erfassungseinrichtungen (7) der Anwesenheit eines Elements (25; 26) im geschlossenen Raum (1) an der Bedienereingriff-Station (6), die zum Beispiel eine Kamera aufweisen,
wobei die Erfassungseinrichtungen (7) in dem geschlossenen Raum (1) angeordnet sind, um mindestens zwei Bereiche (8, 9, 10) zu begrenzen, und ebenfalls Steuereinrichtungen (21) der mindestens einen Betriebsart des Roboters (2) zugeordnet sind, wobei jeder von den Erfassungseinrichtungen (7) begrenzte Bereich (8, 9, 10) einer Betriebsart des Roboters (2) zugeordnet ist,
wobei die Erfassungseinrichtungen (7) auf einer vorbestimmten Höhe über einem Boden (18) des Raums (1) positioniert sind, wobei die Höhe größer ist als die Höhe einer leeren Palette (12), wobei die mindestens zwei Bereiche (8, 9, 10) zumindest teilweise die Bedienereingriff-Station (6) abdecken und sich über einer vorbestimmten Höhe über einem Boden (18) des Raums (1) befinden, wobei auch diese Höhe größer ist als die Höhe einer leeren Palette (12), so dass die Anwesenheit oder nicht einer leeren Palette nicht von den Erfassungseinrichtungen erfasst wird.

2. Anlage nach Anspruch 1, **dadurch gekennzeichnet, dass** die je einer Betriebsart des Roboters (2) zugeordneten mindestens zwei Bereiche (8, 9, 10) die mindestens eine Bedienereingriff-Station (6) zumindest teilweise abdecken.

3. Anlage nach Anspruch 1 oder 2, **dadurch gekennzeichnet, dass** sie zwei Bedienereingriff-Stationen (6) enthält, die im Arbeitsbereich (3) des Roboters (2) enthalten sind, dass der Raum (1) mindestens zwei Öffnungen (5) für den Zugang zu den zwei Bedienereingriff-Stationen (6) und eine Tür (4), die zwischen den mindestens zwei Öffnungen (5) beweglich montiert ist, sowie Anwesenheitssensoren (50, 51) der Tür (4) an jeder der mindestens zwei Öffnungen (5) aufweist.

4. Anlage nach einem der vorhergehenden Ansprüche, **dadurch gekennzeichnet, dass** die Erfassungseinrichtungen (7) begrenzen:
- einen ersten Bereich (8) im Raum (1), wobei der erste Bereich (8) das Auslösen einer Meldeeinrichtung (27) des Eintritts des Elements (25, 26) in den Raum (1) steuert und eine Betriebsart des Roboters (2) gemäß einem vorbestimmten Takt erlaubt,
- einen zweiten Bereich (9) im Raum (1), wobei der zweite Bereich (9) eine Betriebsart des Roboters (2) gemäß einem bezüglich des vorbestimmten Takts verlangsamten Takt steuert,
- einen dritten Bereich (10) im Raum (1), wobei der dritte Bereich (10) das Abschalten des Betriebs des Roboters (2) steuert.

5. Anlage nach einem der vorhergehenden Ansprüche, **dadurch gekennzeichnet, dass** die Erfassungseinrichtungen einen Laserscanner (7) des Raums (1) aufweisen.

6. Anlage nach einem der Ansprüche 1 bis 4, **dadurch gekennzeichnet, dass** die Erfassungseinrichtungen Sensoren aufweisen.

7. Anlage nach einem der Ansprüche 1 bis 4, **dadurch gekennzeichnet, dass** die Erfassungseinrichtungen eine Kamera aufweisen.

8. Anlage nach einem der vorhergehenden Ansprüche, **dadurch gekennzeichnet, dass** sie mit mindestens einem Sensor (20) der Anwesenheit einer Palette (12) in der mindestens einen Bedienereingriff-Station (6) ausgestattet ist.

9. Anlage nach einem der vorhergehenden Ansprüche, **dadurch gekennzeichnet, dass** sie mit Erfassungseinrichtungen einer vollen Palette ausgestattet ist.

10. Anlage nach einem der vorhergehenden Ansprüche, **dadurch gekennzeichnet, dass** die Steuereinrichtungen (21) der mindestens einen Betriebsart des Roboters (2) Sicherheitskontrolleinrichtungen zugeordnet sind.

11. Anlage nach Anspruch 10, **dadurch gekennzeichnet, dass** die Sicherheitskontrolleinrichtungen mindestens eine Folge von Betriebsarten des Roboters (2) erkennen und dem abgeschalteten Roboter (2) erlauben oder nicht, erneut zu arbeiten, oder das Abschalten der Anlage auslösen (207) .

12. Anlage nach einem der vorhergehenden Ansprüche, **dadurch gekennzeichnet, dass** die mindestens eine Bedienereingriff-Station (6) eine Palettierungsstation ist, und dass das erfasste Element ein Bediener (25) oder ein Gabelhubwagen (26) ist.

13. Automatische robotergestützte Palettierungsanlage, bei der mindestens ein Roboter (2) gemäß mindestens einer Betriebsart in mindestens einem Arbeitsbereich (3) eingesetzt wird, wobei die Anlage aufweist
- einen geschlossenen Raum (1), der mit mindestens einer Tür (4) versehen ist, die den Zugang zu mindestens einer Bedienereingriff-Station (6) bietet, wobei die mindestens eine Bedienereingriff-Station (6) sich im Arbeitsbereich (3) des Roboters befindet,
- Erfassungseinrichtungen (7) der Anwesenheit eines Elements (25; 26) im geschlossenen Raum (1) an der Bedienereingriff-Station (6),
wobei die Erfassungseinrichtungen (7) im geschlossenen Raum (1) angeordnet sind, um mindestens zwei Bereiche (8, 9, 10) zu begrenzen, und ebenfalls Steuereinrichtungen (21) der mindestens einen Betriebsart des Roboters (2) zugeordnet sind, wobei jeder von den Erfassungseinrichtungen (7) begrenzte Bereich (8, 9, 10) einer Betriebsart des Roboters (2) zugeordnet ist,
wobei die Erfassungseinrichtungen eine Kamera aufweisen, die die mindestens zwei im Raum begrenzten Bereiche abtasten kann, wobei die mindestens zwei Bereiche die Bedienereingriff-Station (6) zumindest teilweise abdecken und sich über einer vorbestimmten Höhe über einem Boden (18) des Raums (1) befinden, wobei die Höhe größer ist als die Höhe einer leeren Palette (12), so dass die Anwesenheit oder nicht einer leeren Palette nicht von den Erfassungseinrichtungen erfasst wird.

14. Verfahren zur Inbetriebnahme der Anlage nach Anspruch 3, **dadurch gekennzeichnet, dass**
- an der Bedienereingriff-Station (6), die sich hinter einer Öffnung (5) befindet, deren Sensor (50) die Anwesenheit einer Tür (4) erfasst, die Steuereinrichtungen (21) die Durchführung einer Betriebsart des Roboters (2) in der Bedienereingriff-Station (6) kontrollieren, die sich hinter der Tür (4) befindet,
und dass
- an der Bedienereingriff-Station (6), die sich hinter einer Öffnung (5) befindet, deren Sensor (50) keine Tür (4) erfasst, die Steuereinrichtungen (21) den Zugang des Roboters (2) verbieten und die Inbetriebnahme der Erfassungseinrichtungen (7) aktivieren.

15. Verfahren zur Inbetriebnahme der Anlage nach Anspruch 11, **dadurch gekennzeichnet, dass** die mindestens eine Folge von Betriebsarten die Folgende ist:
- Erfassen (201) eines Eindringens in einen ersten Alarmbereich (8), das die Betriebsart des Roboters nicht ändert und einen akustischen oder visuellen Anzeiger auslöst (202),
- Erfassen (203) eines Eindringens in einen zweiten Bereich (9), das einen Betrieb (204) des Roboters (2) gemäß einem verlangsamten Takt steuert,
- Erfassen (205) eines Eindringens in einen dritten Bereich (10), das das Abschalten (206) des Roboters (2) steuert,
- erneutes Erfassen (203') eines Eindringens in den zweiten Bereich (9),
- und erneutes Erfassen (201) eines Eindringens in den ersten Bereich (8).

16. Verfahren zur Inbetriebnahme der Anlage nach Anspruch 9, **dadurch gekennzeichnet, dass**, wenn eine Palette (12) voll ist, die folgenden Schritte durchgeführt werden:
- Auslösen (301) der Öffnung der Tür (4), um den Zugang zur Bedienereingriff-Station (6) zu erlauben,
- Sperren (302) der Steuereinrichtungen der Betriebsart des Roboters (2),
- Überwachen (303) eines vollständigen Austretens der vollen Palette (12) aus der Anlage durch Erfassen der Anwesenheit der vollen Palette (12) in einem dritten Bereich (10), dann in einem zweiten Bereich (9), dann in einem ersten Bereich (8), der von den Erfassungseinrichtungen (7) der Anlage begrenzt wird.

## Claims

1. Robotic automated palletizing installation, in which at least one robot (2) is used in at least one mode of operation in at least one work zone (3), said installation comprising:
- a closed space (1) equipped with at least one door (4) giving access to at least one operator intervention station (6), said at least one operator intervention station (6) being situated in said work zone (3) of said robot,
- means (7) for detecting the presence of an element (25 ; 26) in said closed space (1) at said operator intervention station (6), for example including a camera,
the means (7) for detecting being arranged in said closed space (1) to delimit at least two zones (8, 9, 10), and also being associated with means (21) for controlling said at least one mode of operation of the robot (2), each zone (8, 9, 10) delimited by the means (7) for detecting being associated with one mode of operation of the robot (2),
the means (7) for detecting being positioned at a predetermined height from a floor (18) of said closed space (1), said height being greater than the height of an empty pallet (12), said at least two zones (8, 9, 10) covering at least partially the operator intervention station (6) and being situated higher than a predetermined high from a floor (18) of said closed space (1), said high also being higher than the high of an empty pallet (12), such that the presence or absence of an empty pallet is not detected by the means for detecting.

2. Installation according to claim 1, **characterised in that** said at least two zones (8, 9, 10) each associated with one mode of operation of the robot (2) at least partially cover said at least one operator intervention station (6).

3. Installation according to claim 1 or 2, **characterised in that** it comprises two operator intervention stations (6) comprised in said work zone (3) of the robot (2), **in that** the closed space (1) includes at least two openings (5) for access to the two operator intervention stations (6) and a door (4) fitted so as to be mobile between said at least two openings (5), as well as sensors (50, 51) for the presence of the door (4) at each of said at least two openings (5).

4. Installation according to any of the preceeding claims, **characterised in that** the means (7 for detecting delimit:
- a first zone (8) in said space (1), said first zone (8) controlling the triggering of an entrance alarm (27) of said element (25, 26) into said space (1), and authorizes a mode of operation of the robot (2) at a predetermined pace,
- a second zone (9) in said space (1), said second zone (9) controlling a mode of operation of the robot (2) at a pace slowered compared with said predetermined pace,
- a third zone (10) in said space (1), said third zone (10) controlling the stopping of the operation of the robot (2).

5. Installation according to any of the preceeding claims, **characterised in that** the means (7) for detecting comprise a laser scrutineer (7) of said space (1).

6. Installation according to any of claims 1 to 4 **characterised in that** the means (7) for detecting comprise sensors.

7. Installation according to any of claims 1 to 4 **characterised in that** the means (7) for detecting comprise a camera.

8. Installation according to any of the preceeding claims, **characterised in that** it is equipped with at least one sensor (20) for the presence of a pallet (12) in said at least one operator intervention station (6).

9. Installation according to any of the preceeding claims, **characterised in that** it is equipped with means for detecting a full pallet.

10. Installation according to any of the preceeding claims, **characterised in that** the means (21) for controlling said at least one mode of operation of the robot (2) are associated with safety control means.

11. Installation according to claim 10, **characterised in that** the safety control means identify at least one sequence of modes of operation of the robot (2) and authorize or do not authorize the robot (2) which is stopped to work again, or trigger (207) the stopping of the installation.

12. Installation according to any of the preceeding claims, **characterised in that** said at least one operator intervention station (6) is a palletizing station and **in that** said detected element is an operator (25) or a pallet truck (26).

13. Robotic automated palletizing installation, in which at least one robot (2) is used in at least one mode of operation in at least one work zone (3), said installation comprising:
- a closed space (1) equipped with at least one door (4) giving access to at least one operator intervention station (6), said at least one operator intervention station (6) being situated in said work zone (3) of said robot,
- means (7) for detecting the presence of an element (25 ; 26) in said closed space (1) at said operator intervention station (6),
the detection means being arranged in said closed space (1) to delimit at least two zones (8, 9, 10), and also being associated with means (12) for controlling said at least one mode of operation of the robot (2), each zone (8, 9, 10) delimited by the means (7) for detecting being associated with one mode of operation of the robot (2),
the means (7) for detecting comprising a camera able to scan said at least two zones delimited in the space, said at least two zones covering at least partially the operator intervention station (6) and being situated higher than a predetermined high from a floor (18) of said closed space (1), said high being higher than the high of an empty pallet (12), such that the presence or absence of an empty pallet is not detected by the means for detecting

14. Method for implementing the installation according to claim 3, **characterised in that**
- at the operator intervention station (6) situated behind an opening (5) which sensor detects the presence of a door (4), the means (21) for controlling the implementing of one mode of operation of the robot (2) in the operator intervention station (6) situated behind the door (4), and **in that**
- at the operator intervention station (6) situated behind an opening (5) which sensor does not detect a door (4), the means (21) for controlling deny the access to the robot (2), and activate the implementing of the means (7) for detecting.

15. Method for implementing the installation according to claim 3, **characterised in that** said at least sequence of the modes of operation is as follow :
- detection of an instrusion (201) into a first alarm zone (8), without changing the mode of operation of the robot and triggering (202) an audible or visual indicator,
- detection (203) of an intrusion into a second zone (9) controlling an operation (204) of the robot (2) at a slowered pace,
- detection (205) of an intrusion into a third zone (10) controlling the stop (206) of the robot (2),
- detection (203') again of an intrusion into said second zone (9),
and detection (201) again of an intrusion into said first zone (8).

16. Method for implementing the installation according to claim 9, **characterised in that**, when a pallet (12) is full, following steps are implemented :
- trigger (301) of the opening of the door (4) to autorize access to the operator intervention station (6),
- inhibition (302) of the means (21) for controlling the mode of operation of the robot (2),
- monitoring of a complete exit of said full pallet (12) from said installation by detecting the presence of the full pallet (12) in a third zone (10), then in a second zone (9), then in a first zone (8) delimited by said means (7) for detecting of said installation.
